# NEUE EUROPÄISCHE PATENTSCHRIFT

(11) **EP 0 072 571 B2**
(45) Veröffentlichungstag und Bekanntmachung des Hinweises auf die Entscheidung über den Einspruch: **13.01.1993**
(45) Hinweis auf die Patenterteilung: 26.02.1986
(21) Anmeldenummer: 82107530.6
(22) Anmeldetag: 18.08.1982
(51) Int. Cl.: B65G 47/10, B65G 1/04, G06F 15/24

(54) **Verfahren zum Steuern einer Paletten-Verteileranlage**
Method to control a pallet distributing arrangement
Procédé de commande d'une installation de distribution de palettes

(30) Priorität: 18.08.1981 DE 3132559
(43) Veröffentlichungstag der Anmeldung: 23.02.1983
(73) Patentinhaber: Gebhardt Fördertechnik GmbH, D-74889 Sinsheim (DE)
(72) Erfinder: Felder, Hans-Christian, Dipl.-Ing., D-6022 Dreieichenhain (DE)
(74) Vertreter: Ratzel, Gerhard, Dr.

(56) Entgegenhaltungen:
- DE-A- 1 431 582
- DE-A- 1 902 805
- US-A- 3 734 229
- US-A- 3 880 299
- US-A- 3 908 113
- "Fördern und Heben" 30 (1980), Nr.7, S.590-594

## Beschreibung

Die Erfindung betrifft ein Verfahren zum Steuern einer Paletten-Verteileranlage für ein Vielzahl von unterszchiedlichen Warenarten, die nach Warenart an einem Palettierort postenweise auf Paletten gelagert, in einem mehrbahnigen Durchgangslager nach Warenart gespeichert und aus diesem an einem Verteilerort zu mehreren Warenarten enthaltenden Sendungen zusammengestellt werden, wobei der Zwischentransport zwischen Palettierort und Lager sowie Lager und Verteilerort mittels gleisloservom Fahrer gesteuerter Fahrzeuge erfolgt und ein Rechner mit durch drahtlose Fernsteuerung verbundenen rechnerlosen Nebenstellen am Palettierort, dem Lager, dem Verteilerort und den Fahrzeugen zum Erfassen, Speichern und Abgeben von Signalen vorgesehen ist.

Verteileranlagen von Paletten dienen zum Einlagern, Speichern und bedarfsweisen Auslagern von palettierten Warenarten, um zu verschiedene Warenarten enthaltenden Sendungen zusammengestellt zu werden.

Au der US-PS 3,743,311 ist bereits eine Lagereinrichtung der eingangs genannten Art bekannt, bei der das Ein- und Aus-lagern durch ein gleisloses Fahrzeug erfolgt. Die ein- und ausgelagerten Waren werden durch Eintasten der Kodierung im Fahrzeug einem Rechner mitgeteilt. Der Rechner besitzt somit nur eine Überwachungsfunktion. Mit diesem Verfahren kann aber nicht sichergestellt werden, daß tatsächlich nur die bestimmte Warenart und darüberhinaus in der vorgegebenen bzw. mitgeteilten Menge in das Lager eingegeben oder aus diesem entnommen wird. Fehllagerungen und Entnahmen sowie fehlerhafte Züsammenstellungen von Warensendungen sind hierbei unvermeidlich. Aus der DE-OS 1431 582 ist ferner ein Verfahren zum Lagern und Kommissionieren von Waren bekannt, nach dem die Stückgüter je nacht Art in lager- und verdladbare Mengeneinheiten, und zwarvolleinheiten, Teileinheiten und Kleinstmengeneinheiten gleicher Warenart aufgeteilt und getrennt gelagert werden. Zum Zusammenstellen einer Sendung müssen gegebenenfalls aus allen drei Teillagern Mengeneinheiten geholt und miteinander auf einem eigenen Bereitstellungsgleis miteinander kombiniert werden. Das ein- und Auslagern der Stückgüter kann automatisch durch Lochkarten gesteuert werden. Für jeden Lagerungsvorgang müssen daher mehrere Gruppen von Lochkarten gedruckt werden, was einen hohen Aufwand bedeutet. Insbesondere die Entnahme von Teilund Kleinstmengeneinheiten erfordert darüberhinaus einen weiteren Aufwand fürdie automatische Durchführung. Die Entnahme dieser Teilmengen wird daher zweckmäßigerweise manuell durchgeführt, was zwar den technischen Aufwand reduziert, aber dafür die Gefahr einer Fehlzusammensellung erhöht. Schließlich erfolgt das Be- und Entladen des Lagers mit Hilfe von schienengebundenen Fahrzeugen, die senkrecht zur Transportrichtung im Lager an den Stirnseiten der Regale vorbeigeführt sind. Da wegen der Schienenführung jeweils nur ein Fahzeug Stuckgüter entnehmen kann, ist das jeweilige Entnahmevolumen begrenzt und so die Zeit zum Zusammenstellen einer Sendung relativ hoch. Aus der DE-OS 19 02 805 ist ferner eine Anlage zum drahtlosen Beeinflussen einer größeren Anzahl von auf bestimmten möglichen Wegen befindlichen Fahrzeugen bekannt, die in einem wählbaren Zeit-und Wegeprogramm bewegbar sind. Diese Signale dienen somit nicht der Steuerung zum Be- und Entladen eines Lagers mit Stückgut. Bei dem bekannten Fahrzeugkontrollsystem nach der US-PS 3,734,229 werden dem jeweiligen Fahrzeug durch ein Unterflurkabel Befehle über den Fahrweg mitgeteilt. Eine K ontrolle einer Lagerbe- und -entladung ist dabei nicht vorgesehen. Schließlich ist aus der US-PS 3,908,113 noch ein komputerge-steuertes optisches Sortiersystem bekannt, bei dem beladene Fahrzeuge zu einer vorbestimmten Entladestation geführt werden. Dabei werden mehrmals die vom Hauptkomputer eingegebenen Signale kontrolliert. Auf das Be- und Entladen eines Lagers hat diese Steuerung jedoch keinen Einfluß.

Augabe der Erfindung ist es daher, das fehlerlose Ein- und Auslagern sowie Zusammenstellen von unterschiedlichen Warenarten zu Sendungen mittels gleisloser vom Fahrer gesteuerter Fahrzeuge sicherzustellen.

Diese Aufgabe wird durch die Erfindung dadurch gelöst, daß im Rechner zu einem gespeicherten warenbezogenen Signal ein fahrzeug- und/oderein ortsbezogenes Signal kombiniert wird, im Fahrzeug zum eigenen fahrzeugbezogenen Signal das jeweilige ortsbezogene Signal gespeichert und angezeigt wird und nur bei Überreinstimmung des vom Fahrzeug abgegebenen fahrzeugund ortsbezogenen Signals mit dem rechnergespeicherten fahrzeug- und ortsbezogenen Signals der zugeordnete Teilladevorgang ausführbar ist.

Die mit der Erfindung erzielbaren Vorteile bestehen insbesondere darin, daß jeder Warenposten erfaßt ist und auf seinem Weg vom Palettierort durch das Durchgangslager zum Verteilerort gesteuert wird. Durch die Abgabe und Speicherung von zugeordneten Signalen ist sichergestellt, daß der jeweilige Warenposten nur and der vorbestimmten Stelle entnommen oder abgegeben werden, also nur einem bestimmten Weg nehmen kann. Durch die zentrale Überwachung durch den Rechner werden die angelieferten und ausgelieferten Warenposten erfaßt, desgleichen die zu einer Sendung gehörenden Warenposten der verschiedenen Warenarten. Der Fahrer eines gleislosen Fahrzeuges kann somit nur an der jeweils vorbestimmten Stelle einen Warenposten aufnehmen oder abgeben. Eine Falschlieferung ist daher ausgeschlossen. Da ferner der Fahrer jedes Fahrzeuges zur Auftragserfüllung nur einfache Einzelsignale abzugeben bzw. abzulesen hat, ist die Signalgebund und -verfolgung ebenso einfacht, so daß sie ohne Beeinträchtigung der Fahrtätigkeit wahrgenommen werden kann. Der Zwischentransport durch die Fahrzeuge kann zo zügig und flexibel erfolgen. Mit dem Verfahren nach der Erfindung wird so eine Vielzahl von unterschiedlichen Warenarten fehlerlos eingelagert und ebenso zu mehrere Warenarten enthaltenden Sendungen zusammengestellt.

Weitere Merkmale der Erfindung sind in den Unteransprüchen beschrieben.

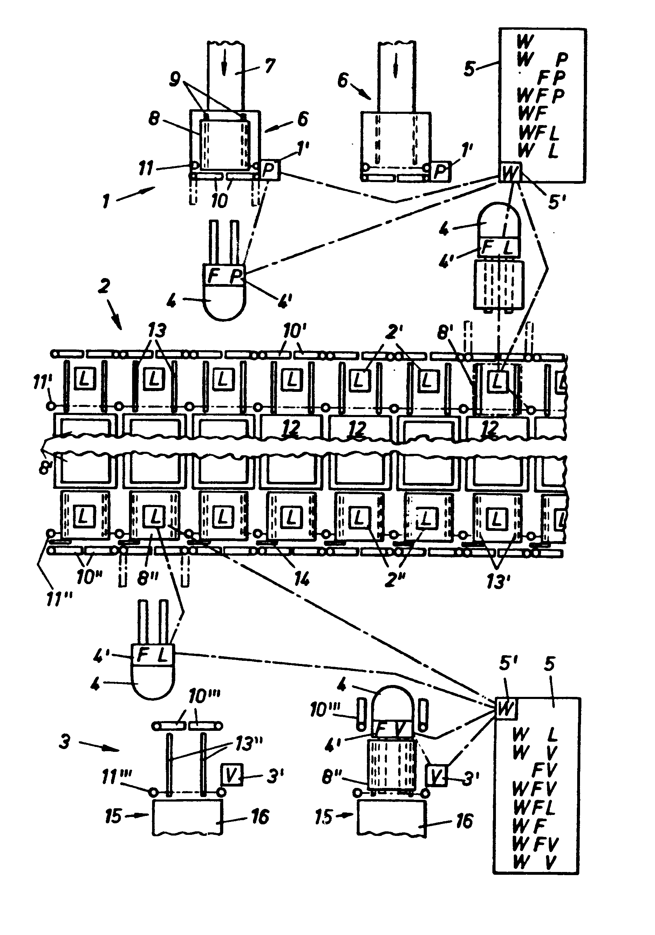

Die Erfindung wird anhand eines in der Zeichnung dargestellten Ausführungsbeispiels erläutert.

Die Verteileranlage für eine Vielzahl von Warenarten, die nach Warenart auf Paletten postenweise gelagert sind, besteht aus einem Palettierort 1, einem Durchgangslager 2 und einer Verteilerort 3. Zum Transport zwischen Palettierort 1 und Lager 2 sowie Lager 2 und Verteilerort 3 dienen gleislose vom Fahrer gesteuerte Fahrzeuge, insbesondere Gabelstapler. Uberwacht wird die ganze Anlage durch einen zentralen, elektronischen Rechner 5, der in derZeichnung der Übersicht halber doppelt dargestellt ist. Verbunden ist der Rechner 5 mit dem Palettierort 1, dem Lager 2, dem Verteilerort 3 und den Fahrzeugen 4 durch eine drahtlose Fernsteuerung, insbesondere durch eine infrarot-Fernsteuerung. Zu diesem Zweck sind die genannten Stellen mit Sende-Empfänger-Geräten 1', 2', 2", 3', 4' und 5' ausgestattet.

Der Palettierort 1 weist mehrere Palettierstellen 6 auf, bei denen auf einem Transportband 7 o. dgl. die einzelnen Warenstücke angeliefert und dort auf Paletten 8 gestapelt werden. Diese ruhen auf Stützen 9, die zum Abheben der Palette 8 durch ein Fahrzeug 4 geeignet sind. Am dem Transportband 7 gegenüberliegenden Ausgang der Palettiertstelle 6 ist eine Sperre 10 in Form einer motorisch antreibbaren Tür, Klappe, eines Schiebers o. dgl. angeordnet, die in ihrer Schließstellung den Ausgang versperrt und in ihrer strichpunktiert angedeuteten Offenstellung freigibt. In der Nähe der Sperre 10 ist innerhalb der Palettierstelle 6 noch eine Lichtschranke 11 angeordnet, deren Lichtstrahl normalerweise von der auf den Stützen 9 ruhenden Palette 8 unterbrochen ist.

Das Lager 2 ist als mehrbahniges Durchgangslager ausgebildet, bei dem nebeneinander mehrere Transportbahnen 12 zum Fördern und Stauen der eingelagerten Paletten 8' angeordnet sind. Eingangseitig ist zum Absetzen der Paletten 8 vom Fahrzeug 4 eine auf Schwerklraft wirkende oder motorisch angetriebene Rollenbahn 13 vorgesehen, an deren Eingang eine entsprechend der Sperre 10 ausgebildete Sperre 10' angeordnet ist. Am der Sperre 10' entgegengesetzten Ende der Rollenbahn 13 ist eine Lichtschranke 11' vorgesehen, deren Lichtstrahl durch die Palette 8' unterbrochen wird. Entsprechend ist der Ausgang jeder Transportbahn 12 ebenfalls mit einer Sperre 10" und einer Lichtschranke 11" sowie einer Rollenbahn 13' ausgestattet. Gesichert gegen ungewolltes Herausrollen ist die letzte Palette 8" durch eine mechanisch betätigbaren Riegel 14.

In weiterhin ähnlicher Weise kann der Verteilerort 3 mit mehreren Ladestellen 15 ausgestattet sein, die eingangsseitig wiederum durch eine Sperre 10"' verschlossen sind, hinter der sich eine Rollenbahn 13" befindet. Das Ende dieser Rollenbahn 13" ist auch hier durch eine Lichtschranke 11 "' abgesichert. Daran schliebt sich eine Transportbahn 16 oder eine Ladevorrichtung zum Beladen von Lastkraftwagen, Eisenbahnwagons o. sgl. an.

Die Funktionsweise dieser Verteileranlage ist folgende:

Die auf dem Transportband 7 angekommenen Warenteile werden auf der Palette 8 zu wareneinheitlichen Warenposten gestapelt. Sobald eine Palette 8 beladen ist, wird über das Gerät 1' ein die Warenart bezeichnendes warenbezogenes Signal W und ein die Palettierstelle 6 angebendes ortsbezogenes Signal P abgegeben, das im Gerät 5' des Rechners 5 aufgenommen und dem Rechner 5 eingegeben wird, der es als kombiniertes Signal WP speichert. Gleichzeitig wird auf einer Sichtanzeige am Gerät 1' oder einer anderen Stelle an der Palettierstelle 6 ein Freizeichen gegeben. Wünscht nun der Fahrer eines Fahrzeuges 4 diese Palette 8 aufzunehmen, dann stellt er das Fahrzeug 4 in Signalposition vor die Palettierstelle 6 und gibt mit seinem Gerät 4' ein aus seiner Fahrzeugkennung bestehendes fahrzeugbezogenes Signal F und dem ortsbezogenen Signal P der Palettierstelle 6 zusammengesetztes Signal ab. Im Rechner 5 wird dieses Signal FP mit dem warenbezogenen Signal WP zum Signal WFP kombiniert und über das Gerät 1'der Offnungsmechanismus der Sperre 10 in Gang gesetzt, so daß diese in die strichpunktierte Offenstellung gelangt. Nunmehr kann das Fahrzeug 4 einfahren die Palette 8 abheden und wieder herausfahren. Sobald die durch die Palette 8 unterbrochene Lichtschranke 11 geschlossen ist, wird ein Signal ausgelöst und an den Rechner 5 gegeben, des das ortsbezogene Signal P löscht. Es bleibt so nur noch das Signal WF, durch welches das Fahrzeug 4 mit der Palette 8 belastet ist. Mit der Freigabe durch die Lichtschranke 11 ermittelt der Rechner 5 weiterhin eine der Warenart zugeordnete, noch aufnahmefähige Transportbahn 12 im Lager 2 und gibt diese Anweisung in Form eines neuen ortsbezogenen Signals L an das Fahrzeug 4, so daß auf der Anzeigetafel des fahrzeugeigenen Gerätes 4' dad Signal L aufleuchtet, wie am rechts gezeichneten Fahrzeug 4 angedeutet ist. Im Rechner 5 ist jetzt das Signal WFL gespeichert

Das Fahrzeug 4 fährt nun in Signalposition vor die angezeigte Transportbahn 12 und gibt sein fahrzeugbezogenes Signal F und das angezeigte ortsbezogene Signal L ab. Der Rechnung 5 vergleicht dieses abgegebene Signal FL mit dem gespeicherten Signal WFL, wobei derwarenbezogene Signalteil W unberücksichtigt bleibt. Bei Übereinstimmung des Signals FL wird der Befehl zum Öffnen der Sperre 10' gegeben. Die Sperre 10' öffnet sich und das Fahrzeug 4 kann mit der Palette 8 einfahren und diese auf der Rollenbahn 13 absetzen. Diese bewegt die Palette 8' in das Lager 2 auf die Transportbahn 12. Sobald die Lichtschranke 11' des Passieren der abgesetzten Palette 8' gemeldet hat, wird im Rechner 5 das fahrzeugbezogene Signal F gelöscht, d.h. das Fahrzeug 4 ist vom Besitz der Palette 8 emtlastet.

Nach dem Herausfahren des Fahrzeugs 4 aus der Öffnung schließt sich die Sperre 10'. Das Fahrzeug 4 kann nun eine weitere oder die gleiche Palettierstelle 6 anfahren, um eine neue Palette 8 zu holen, wobei sich das geschilderte Steuerungsverfahren wiederholt. Soll immer die gleiche Palettierstelle 6 angefahren werden, dann kann durch ein Haltesignal auch das ortsbezogene Signal P dieser Palettierstelle 6 gespeichert gehalten werden und erscheint sofort nach Beendigung des Teilladevorgangs im Lager wieder auf derfahrzeugeigenen Anzeigetafel. Im Rechner verbleibt das Signal WL, das als Lager-bestand die Zahl der Paletten 8 einer bestimmten Warenart auf der Transportbahn 12 im Lager 2 anzeigt.

Entsprechend vollzieht sich der Ladevorgang am Verteilerort 3. Vom Fahrzeug 4 wird mit seinem fahrzeugbezogenen Signal F das ortsbezogene Signal V einer Ladestelle 15, an der durch Freizeichen angezeigt ist, daß beladen werden kann, an den Rechner 5 gegeben, der es als Signal FV speichert. Im Rechner 5 ist ferner vorher die Zusammenstellung der zu verladenden Sendung in Kombination mit dieser Ladestelle V das Signal WV eingegeben worden. Auf Grund des gemeinsamen Signals V ermittelt der Rechner 5 die zu verladende Sendung, und das Fahrzeug 4 erhält das ortsbezogene Signal L einer Transportbahn 12 im Lager 2, in der eine der verladenden Warenarten dieser Sendung lagert. Gibt das Fahrzeug 4 in Signalposition vor dieser Transportbahn 12 sein fahrzeugbezogenes Signal F und das ortsbezogene Signal L an das Gerät 2", dann wird bei Übereinstimmung des gespeicherten und des eingegebenen Signals FL die Sperre 10" geöffnet. Das wartende Fahrzeug 4 kann einfahren. Ist die Palette 8" aufgenommen, wird der Riegel 14 auf ein automatisch oder handgegebenes Zeichen in die Freigabestellung gestellt und das Fahrzeug 4 kann mit der Palette 8" ausfahren. Sobald die Lichtschranke 11" geschlossen ist, wird das ortsbezogene Signal L im Rechner 5 und im Fahrzeug 4 gelöscht und das ortsbezogene Signal V der Ladestelle 15 eingegeben, so daß im Rechner 5 das Signal WFV und auf dem Fahrzeug 4 das Signal FV erscheint.

In Signalposition vor der bezeichneten Ladestelle 15 wird das fahrzeugbezogene Signal F und das auf die Ladestelle 15 ortsbezogene Signal V gegeben. Bei Übereinstimmung mit dem im Rechner 5 gespeicherten Signal WFV öffnet sich die Sperre 10"' und das Fahrzeug 4 kann einfahren und die Palette 8" auf der Rollenbahn 13" absetzen. Hat die Palette 8" bei der anschlies senden Transportbewegun g die Lichtschranke 11"' passiert, wird im Rechner 5 das fahrzeugbezogene Signal F gelöscht. Es bleibt nur noch das sendungsbezogene Signal WV gespeichert, und zwar solange, wie noch Paletten dieser Sendung zu verladen sind. Nach Verlassen der Ladestelle 15 durch das Fahrzeug 4 schließt die Sperre 10"' wieder automatisch. Ist die Sendung komplett, dann wird auch das ortsbezogene Signal V gelöscht. Es können keine Paletten mehr in die Ladestelle 15 transportiert werden, da die Sperre 10"' nicht mehr öffnet. Natürlich kann auch hier das ortsbezogene Signal V durch ein Haltesignal auf dem Fahrzeug 4 und im Rechner 5 gespeichert bleiben, und zwar solange, bis die Sendung vollständig verladen ist. Das Haltesiginal kann bewirken, daß nur dieses Fahrzeug 4 den bestimmten Ladevorgang ausführt, es kann aber auch sein, daß sich andere Fahrzeuge 4 wahlweise zuschalten können.

Es ist ersichtlich, daß ein Ladevorgang mit seinen Teilladevorgängen nur an den vorbestimmeten Ladestellen ausgeführt werden kann und auch nur dann, wenn die eingegebenen und gespeicherten Signale übereinstimmen. Es können also nur die vom Rechner kontrollierten Ladevorgänge ausgeführt werden, so daß auch nachträglich noch der Inhalt der bereits abgesandten Sendung überprüft werden kann.

## Patentansprüche

1. Verfahren zum Steuern einer Paletten-Verteileranlage für eine Vielzahl von unterschiedlichen Warenarten, die nach Warenart an einem Palettierort (1) postenweise auf Paletten (8) gelagert, in einem mehrbahnigen Durchgangslager nach Warenart gespeichert und aus diesem an einem Verteilerort (3) zu mehrere Warenaten enthaltenden Sendungen zusammengestellt werden, wobei der Zwischentransport zwischen Palettierort und Lager sowie Lager und Verteilerort mittels gleisloser vom Fahrer gesteuerter Fahrzeuge erfolgt und ein Rechner (5) mit durch drahtlose Fernsteuerung verbundenen rechnerlosen Nebenstellen am Palettierort, dem Lager, dem Verteilerort und den Fahrzeugen zum Erfassen, Speichern und Abgeben von Signalen vorgesehen ist, dadurch gekennzeichnet, daß im Rechner (5) zu einem gespeicherten warenbezogenen Signal (W) ein fahrzeug- und/oder ein ortsbezogene Signal (F/P) kombiniert wird, im Fahrzeug zum eigenen fahrzeugbezogenen Signal (F) das jeweilige ortsbezogene Signal (P) gespeichert und angezeigt wird und nur bei Übereinstimmung des vom Fahrzeug abgegebenen fahrzeug- und ortsbezogene Signals mit dem rechnergespeicherten fahrzeug- und ortsbezogenen Signal der zugeordnete Teilladevorgang ausführbar ist.

2. Verfahren nach Anspruch 1, dadurch gekennzeichnet, daß im Fahrzeug während eines Ladevorganges nach Abschluß eines Teilladevorganges das diesem zugeordnete ortsbezogene Signal (P) gelöscht und das dem folgenden Teilladeort zugeordnete ortsbezogene Signal vom Rechner eingegeben wird.

3. Verfahren nach den Ansprüchen 1 und 2, dadurch gekennzeichnet, daß das zweite ortsbezogene Signal nur gespeichert wird, wenn der vorhergegangene Teilladevorgang als abgeschlossen gemeldet ist.

4. Verfahren nach Anspruch 1, dadurch gekennzeichnet, daß das fahrzeugbezogne Signal im Rechner nach Beendigung des Ladevorganges gelöst oder durch ein vom Fahrzeug gegebenes Haltesignal gespeichert gehalten wird.

5. Verfahren nach den Ansprüchen 1 und 2, dadurch gekennzeichnet, daß das erste ortsbezogene Signal eines Ladevorganges vom Fahrzeug aus manuell eingespeichert wird.

## Claims

1. Technology for the control of a pallet distribution installation for a variety of different goods provided to be loaded by lots on pallets (8) at a palletting station and to be stored by groups of goods inside a multi-track transit store from where they will be called and carried to a distributing station (3) to be assembled to dispatch units each containing various kinds of goods. The intermediate transportation either from the paletting station to the store or from the store to the distributing station is carried through by trackless cars steered by driver. A computer (5) being radio-connected with com- puterless extension stations at the palleting station, inside the store, at the distributing station as well as inside the trucks has been installed to take up, to store, and to emit signals. It features are that the computer is combining a signal relating to a determined truck and/or location (station) (F/P) in addition to storing a signal (W) relating to determined goods. Inside the truck the signal relating to the relevant station is stored and indicated in addition to the signal (F) relating to this truck. Only on the condition that the signal emitted from the truck and referring to both the truck and station conform to the signal stored by the computer with regard to the respective truck and station the provided partial loading process can be carried out.

2. The feature of the operation as per Claim 1 is that while loading is in process after termination of a partial loading process the given signal (P) relating to the station is cancelled inside the truck, and the signal relating to the next station where partial loading is to take place is inscribed by the computer.

3. The feature of the operation as per the Claims 1 and 2 is that the second signal relating to the station is only stored by the computer on the condition that the previous partial loading process has been reported as terminated.

4. The feature of the operation as per the Claim 1 is that the signal relating to a determined truck is cancelled inside the computer after termination of the loading process, or it may be kept stored by a stop signal given from the truck.

5. The feature of the operation as per the Claims 1 and 2 is that the first signal relating to a loading process at a determined station is manually inscribed from the truck.

## Revendications

1. Technologie prévue pour commander une installation de distribution de palettes destinée à transporter un grand nombre de différentes sortes de marchandises qui, à un endroit de palettisation (1) et par sorte de marchandise, sont stockées par lot sur palettes (8) qui, ensuite, sont entreposées dans un magasin transitaire sur plusieurs voies salon la nature de la marchandise et qui de là sont retirées pour être groupées à un endroit de distribution (3) pour en former des unités d'expédition, chacune contenant plusieurs sortes de marchandises. Le transport intermédiaire entre l'endroit de palettisation et le magasin, ainsi qu'entre le magasin et l'endroit de distribution, se fait au moyen de vehicules sans rails dirigeable par chauffeur. Un ordinateur (5) relié partelécom- mande sans fil aux postes secondaires sans ordinateur à l'endroit de paletissation au magasin, à l'endroit de distribution et aux camions est prévu pour détecter mémoriser et donner des signaux. Il est caractérisé par le fait qu'un signal (W) mémorisé à l'ordinateur (5) est combiné avec un signal (F/P) destiné à la fois au camion et à l'endroit. Dans le camion le signal donné relatif à l'endroit (P) est mémorisé et indiqué en combinaison avec le propre signal (F). Seulement dans le cas où le signal donné par le camion et se rapportant à la fois audit camion et endroit est en correspondance avec le signal mémorisé par l'ordinateur concernant ledit camion et endroit le procédé de chargement partiel peut être excécuté.

2. Le procédé selon la revendication 1 est caractérisé par le fait que lorsqu'un chargement est en cours, après clôture d'un chargement partiel, le signal (P) relatif à cet endroit est effacé au camion et l'ordinateur introduit le signal concernant l'endroit où le chargement partiel suivant aura lieu.

3. Le procédé selon les revendications 1 et 2 est caractérisé par le fait que le deuxième signal se rapportant à l'endroit en question est seulement mémorisé lorsque le procédé précédent de chargement partiel a été signalé comme terminé.

4. Le procédé selon la revendication 1 est caractérisé par le fait que le signal qui était destiné au camion est effacé à l'ordinateur après la terminaison du chargement, sinon il est tenu mémorisé par une signal de maintien donné par le camion.

5. Le procédé selon les revendications 1 et 2 est caractérisé par le fait que le premier signal destiné à l'endroit de chargement est introduit manuellement par le camion dans la mémoire de l'ordinateur.
